## Europäisches Patentamt

## European Patent Office

## Office européen des brevets

(19)

(11) Publication number: **0 043 202**
**B1**

(12)

# EUROPEAN PATENT SPECIFICATION

(45) Date of publication of patent specification: **11.04.84**

(51) Int. Cl.³: **A 23 K 1/18, A 23 K 1/16**

(21) Application number: **81302691.1**

(22) Date of filing: **16.06.81**

(54) **Additive composition for the treatment principally of the starch fraction of protein and carbohydrate-containing animal feedingstuffs.**

(30) Priority: **20.06.80 GB 8020157**

(43) Date of publication of application:
**06.01.82 Bulletin 82/1**

(45) Publication of the grant of the patent:
**11.04.84 Bulletin 84/15**

(84) Designated Contracting States:
**AT BE CH DE FR GB IT LI NL SE**

(56) References cited:
BE - A - 881 968
DE - A - 2 822 488
FR - A - 1 599 342
FR - A - 2 072 839
GB - A - 1 099 583
GB - A - 2 037 563

(73) Proprietor: **INOVA INVESTMENTS LIMITED**
**High Holborn House**
**High Holborn London (GB)**

(73) Proprietor: **Farmos-Yhtymä Oy**
**P.O. Box 425**
**SF-20101 Turku 10 (FI)**

(72) Inventor: **Jackson, Peter**
**15 Ray Mead Court**
**Maidenhead Berkshire (GB)**
Inventor: **Virrki, Markku**
**P.O. Box 425**
**SF-20101 Turku 10 (FI)**

(74) Representative: **Warden, John Christopher et al,**
**R.G.C. Jenkins & Co. 12-15, Fetter Lane**
**London EC4A 1PL (GB)**

**The file contains technical information submitted after the application was filed and not included in this specification**

Courier Press, Leamington Spa, England.

# O 043 202

Additive composition for the treatment principally of the starch fraction of protein and carbohydrate-containing animal feedingstuffs

This invention relates to feedingstuff of animal, vegetable or synthetic origin used for the feeding of a mono- or diagastric animals. In particular, the invention relates to compositions to reduce the rate and degree to which the feedingstuffs are broken down wastefully by the microbes resident within the forestomach or rumen of ruminant livestock and/or the caecum or intestine of monogastric animals.

In the present invention the term feedingstuff means all materials of a natural or synthetic origin that contribute to the protein and/or energy economy of the livestock.

In particular, this invention is concerned with the treatment of such feedingstuff to improve the efficiency with which the animals produce meat, milk and other animal products such as wool, and the efficiency with which they convert nutrients for the purpose of maintenance.

It is also concerned with the efficiency with which the animals are able to convert tissue protein and lipid for the above purposes whilst maintaining normal physiological functions.

It is well well known that amino acids, peptides and polypeptides, lipids and starch are all nutrient materials which are essential to the optimal functioning of animals. But, in the ruminant, the presence of the rumen or forestomach, wherein resides a mixed microbial culture of bacteria and protozoa, creates problems for the efficient use of such nutrients in foodstuffs in that they are degraded or modified by this mixed culture to a variable degree to substances which may be of inferior nutrient value and at an energy cost to the host animal and this can deprive the host animal of a supply of essential nutrients sufficient to allow it to function at an optimal physiological and economic level. Also, it is known that the host animal has the ability to convert body tissue into amino acids and energy sources, such as lipid and glucose, to make good a deficit in the supply of these nutrients from the diet, but, that such conversations may impair physiological efficiency to the point where an abnormal physiological state is induced and the animal suffers from metabolic disorders such as acetonaemia, ketosis or acidosis, and that such clinical states lead to a loss of performance and even death.

The use of heat, formaldehyde and related tanning agents to reduce the degree of degradation of protein in the rumen has already been suggested, albeit with variable and often unpredicable reponses:

British Patent No. 1,099,583 relates to the use of tanning agents of natural or synthetic origin, which possess the property of stabilising proteins in the state of complexes which are dissociated by proteolytic enzymes in the alimentary tract but protected from attack in the rumen.

British Patent No. 1,137,213 relates to the use of formaldehyde, a polymer of formaldehyde and other substances to complex with the surface of the protein material and reduce its solubility and hence susceptibility to breakdown in the rumen through microbial activity.

French Patent 2072839 describes the use of formaldehyde as a cross-linking agent in the preparation or thickening of certain animal and vegetable glues or for condensing with urea.

French Patent 1599342 (British Patent 1,245,830) describes the use of ammonium lignosulfonate together with an acid (but without any reference to formaldehyde to open up the husk of grain and condition the inside in order to render it more digestable. The treatment is used as a pretreatment prior to rolling in order to improve flaking.

It is also known from the prior art that the degree to which proteins are degraded within the rumen is linked to the type of microbial population resident within the forestomach or rumen and that proteolysis is a particular feature of certain of the amylolytic or starch reducing bacteria.

Also, the ruminant animal, in common with the monogastric, requires glucose for the proper functioning of its metabolic activities and that in normal circumstances the usual source of glucose is starchy foodstuffs. So, the fermentation of starch in the rumen not only causes degradation of proteins but deprives the host animal of this essential glucose. Since protein is also an indirect source of glucose, via the process of gluconeogenesis, this reduces the supply of glucose still further and will ultimately lead to the development of the harmfull physiological states of acetonaemia, ketosis or acidosis.

Also, the wasteful fermentation of starch in the rumen reduces the degree to which the fibrous fraction of the diet is beneficially fermented by the rumen microbes; since those bacteria which are beneficial for this purpose are reduced in numbers by the lowered acidity resulting from the fermentation of the starch. This in turn leads to a reduction in the level of production of the short chain fatty acid, acetic acid and an increase in the amount of propionic acid in the rumen digesta. In the lactating cow this results in a drop in the level of milk fat with adverse economic consequences. Farmers try to optimise the use of home grown crops, especially grass and grass products which yield the largest amounts of protein and energy per unit area, and thus any factors which reduce the level at which these forages can contribute to the ration of ruminants or their efficiency of conversion to animal products is of adverse economic consequence.

The importance of protecting starch from degradation in the rumen has been shown by Macrae and Armstrong (Brit. J Nutr. 23, 377, 1969) in which it has established that only some 8—10% of starch product in the ration in the form of $\alpha$-linked glucose polymer reaches the small intestine and contributes to the requirement for glucose. This is insufficient to meet even a part of the requirement and the animal depends upon the process of gluconeogenesis for the remainder.

2

**0 043 202**

Protein, lipid and propionic acid are known gluconeogenic materials and it is thus necessary to feed increased amounts of these to meet the glucose need. But, when it is realised that these materials are costly and further, that they reduce the efficiency of use of the more economic and beneficial forages the importance of the invention will be clear.

According to the invention there is provided a composition for the treatment principally of the starch fraction of protein and carbohydrate-containing animal feedingstuff in the form of an aqueous solution containing in weight percent of the total weight:—

| | | |
|---|---|---|
| Sulphite waste liquid or lignin sulphonate | | 5 to 15, |
| | preferably | 5 to 9 |
| formaldehyde (HCHO) | | 9 to 25 |
| one or more organic acids | | 30 to 60. |

Preferred organic acids are $C_1$—$C_6$ aliphatic carboxylic acids, e.g. mixtures of acetic and isobutyric acids or propionic and isobutyric acids or acetic and propionic acids.

However other possible acids include acrylic, valeric, caprilic and caproic, whether of straight or branch chain. Some of these are normally present in sulphite waste liquor and also organic sulphonic acids.

According to another aspect of the invention there is provided a method of treating a feedingstuff for ruminant animals in the moist state (moisture content 15—85%) which comprises the admixture with the feedingstuff of a solution of a composition as described above.

According to yet another aspect the invention provides a method of treating a protein and carbohydrate-containing feedingstuff for ruminant animals in the moist state (moisture content 15—85%) which comprises the admixture with the feedingstuff of an amount of a solution of a composition as described above which is effective to improve the preservative of the whole grains of the feedingstuff and reduce the degree of breakdown of the starch fraction of the feedingstuff in the rumen of the animal.

The invention improves the supply of $\alpha$-linked glucose polymer to the host both directly by the protection of the starch and hemicellulose fractions and lipid fractions in the ration from rumen degradation to a beneficial degree but also indirectly via the protection of the protein fraction in the ration from rumen proteolysis and improves the supply of beneficial fatty acids, acetic and butyric, for the process of milk synthesis in the cow by encouraging the beneficial fermentation and level of inclusion of forages, especially grass and grass products. Further, the increased supply of $\alpha$-linked glucose allows the animal to convert fat from tissue stores into milk lipid and energy without the danger of acetonaemia, ketosis or acidosis, thus permitting an increase in the level of inclusion of forage in the ration and the consequent economic benefit.

The invention may best be effected through the treatment of those feedingstuffs containing large amounts of starch and hemicellulose precursors of $\alpha$-linked glucose polymer; especially grains, seed crops, manioc, etc, but is also valuable for the treatment of forages containing such precursors, such as grass and grass products- silage, hay, dried grass, maize and maize silage and whole crop cereal silage. It may also be used for the treatment of lipids and synthetic feedingstuffs containing proteins, lipids, starch or hemicellulose as for example microbial proteins produced by fermentation.

In the course of the experiments it has also been found that the products have an unexpected effect on the activity of toxins produced from moulds which are often found on moist cereals in that it detoxifies such materials and makes the product safe for consumption by livestock. The invention has the further benefit of preserving the treated grains in the moist state against harmful bacterial and mould growth.

3

Example 1

The following formulations were tested for solution stability over a period of about a year at 35°C, and their preserving effect on whole moist grains. (Columns show percent by weight.)

| | | Solution No. | | | | |
|---|---|---|---|---|---|---|
| Ingredients | | 1 | 2 | 3 | 4 | 5 |
| Formalin[1] | | 28 | 41 | 55 | 55 | 55 |
| Isobutyric acid | | 25 | 22 | 25 | — | |
| Acetic acid | | 32 | 21 | 5 | | 30 |
| Lignone sulphonate[2] | | 7.5 | 7.5 | 7.5 | — | |
| Sugar alcohol[3] | | — | — | — | 30 | |
| Stabiliser[4] | | 7.5 | 7.5 | 7.5 | 15 | 15 |

[1] A 37% w/w solution of formaldehyde containing 6.8% w/w of methanol.

[2] Aqueous solution containing 12 to 55% by weight of lignosulphite (lignosulphin), 20 to 60% of lignose (sugars), 18 to 25% by weight of hemicellulose and sugar acids e.g. lignoceric acid, and 4 to 12% of organic acids (mainly $C_1$ to $C_6$ aliphatic carboxylic acids) and minor amounts of other compounds e.g. sodium sulphite and/or dioxan.

[3] A mixture of sugar alcohols obtained from birch wood and containing xylitol, arabinol, mannitol, sorbitol, dulcitol and rhamnitol.

[4] 30% w/w solution in water of urea and utropine in a ratio of 10:1.

It has been found that solutions 1 and 3 were less stable than the others with some polymerisation occurring.

However all of solutions 1, 2 and 3 had a useful preserving action against mould when used at a minimum rate of 1.25 times the recommended rate for propionic acid. Solution 4 actually encourages the growth of moulds and yeasts. Solution 5 had no lasting preservative action on whole grains but was active if the grains were first crushed and then ensiled to prevent loss of formaldehyde.

However the result of degradability tests carried out by a standard in-vivo study as described in Example 2 gave quite unexpectedly good results for Solution 2 demonstrating a synergism between the components that is not predictable from the activity of the individual components. A similar effect was noted for starch and organic matter degradabilities.

Example 2

The following treatments were applied to whole oats (moisture content 35%) at the rates given in Table 1. The treated samples were stored for several months prior to the tests.

TABLE 1

| No. | Treatment | Rate in l/1000 kg | HCHO recovered from the crude protein gHCHO/100 g CP' |
|---|---|---|---|
| A | propionic acid | 15.1 | |
| B | grain was dried | | |
| C | Solution 2 (Ex. 1) | 18.4 | 0.9 |
| D | Solution 2 | 25.0 | 1.7 |
| E | Solution 4 | 2.8*l/1000 kg | 0.8 |
| F | Solution 4 | 4.8* | 1.2 |

*approx. 'crude protein

The above dosage ratios were designed to add comparable amounts of formaldehyde.

The oats were fed to sheep by a standard *in sacco* technique in which the samples were placed in a permeable nylon bag and placed in the rumen of rumen-fistulated sheep. The contents of the bag were sampled after 2, 5 and 9 hours. A, C and D had been stored for about 5 months.

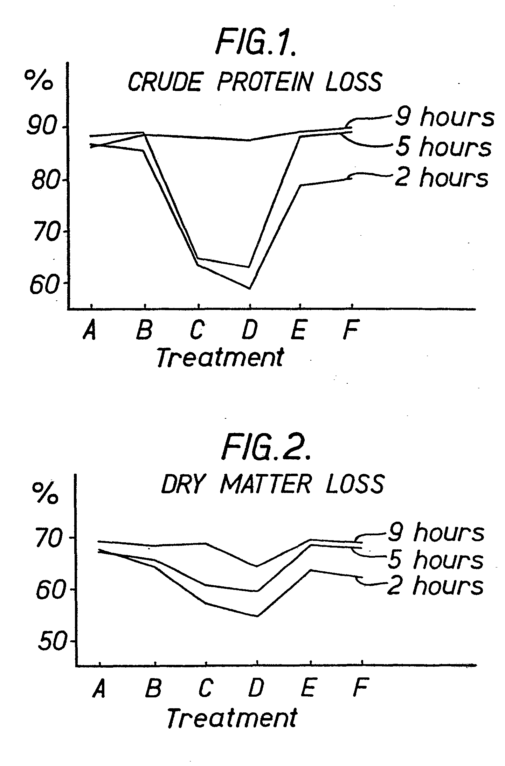

Table 2 shows the crude protein losses for the various treatments after the different insertion periods. Figure 1 represents Table 2 in the form of a chart. It can be seen that treatment C and D are very substantially superior to the remaining treatments, even those employing formaldehyde.

TABLE 2

| Treatment No. | Crude protein loss after | | |
|---|---|---|---|
| | 2 hrs | 5 hrs | 9 hrs |
| A (% by weight) | 86.91 | 87.37 | 86.19 |
| B | 85.40 | 88.69 | 88.05 |
| C | 63.80 | 64.06 | 87.91 |
| D | 59.06 | 62.84 | 87.66 |
| E | 78.23 | 87.17 | 88.79 |
| F | 79.67 | 87.56 | 87.93 |

Table 3 shows the total dry matter losses and Figure 2 represents Table 3 in graphic form.

TABLE 3

| Treatment No. | Dry matter loss after | | |
|---|---|---|---|
| | 2 hrs | 5 hrs | 9 hrs |
| A (% by weight) | 67.80 | 67.18 | 69.39 |
| B | 64.78 | 65.36 | 67.97 |
| C | 56.89 | 0.13 | 68.92 |
| D | 57.57 | 58.72 | 63.53 |
| E | 63.14 | 67.21 | 67.61 |
| F | 61.49 | 66.77 | 67.41 |

Figure 2 shows that the synergistic protective effect of the addition of lignone sulphonate is not confined to protein degradation but extends generally to the dry matter, including starch and hemicellulose fractions of the feedingstuff.

Example 3

Grains treated as per Example 2, treatments A to D (table 1) were fed to castrated sheep in a standard 4×4 latin square design balance study. The basal diet was hay, offered at a level of 512 g per animal daily.

TABLE 4

| | Treatment | | | |
|---|---|---|---|---|
| | A | B | C | D |
| Digestibilities (Assimilation in weight %) | | | | |
| Organic matter | 73.9 | 73.0 | 73.7 | 72.0 |
| Crude protein | 73.4 | 74.5 | 72.6 | 69.6 |
| Crude fat | 91.4 | 91.9 | 92.1 | 90.1 |
| N.F.E.[x] | 78.8 | 78.5 | 80.1 | 79.1 |
| Crude fibre | 40.8 | 35.4 | 32.3 | 27.4 |
| Balance data | | | | |
| Nitrogen (g/day) | 1.2 | 1.5 | 2.0 | 1.8 |
| Nitrogen (% N intake) | 6.1 | 8.4 | 10.1 | 9.2 |
| Nitrogen analysis of grains (dry matter basis) % total N | | | | |
| Ammonia N | 1.8 | 0.8 | 1.1 | 0.3 |
| Soluble N | 26.9 | 31.1 | 9.9 | 9.0 |

[x]Non Esterified Fatty Acids

Table 4 shows the significant positive effects of the treatment of grains with Solution 2 (treatments C and D) on the breakdown of protein nitrogen to ammonia and soluble nitrogen during the storage period. These effects are reflected in the measured improvements in nitrogen balance inspite of the reduced digestibility of crude protein for these treatments.

Surprisingly, the reduced rate of loss of dry-matter, Example 2, for the grains treated with Solution 2 was not reflected in a reduction of the overall digestibility of organic-matter of N.F.E. (non-esterified fatty acids) and indeed resulted in a significant improvement in nitrogen balance.

A comparison of the response to the level of addition of Solution 2 (treatments C and D) demonstrates that an optimum level of use of the solution occurs at about the level given in treatment C but that the effect of overdosage is not critical.

Example 4

Ground dried oats were treated with either formalin alone or with Solutions 2 or 4 (Example 1) to give a level of formaldehyde recovered (ref. modified method, Official Methods of Analysis, AOAC 31.189 (1980) page 530) from the protein of 0.8 g/100 g Crude Protein. In addition, there was a further treatment (Treatment L) in which fresh moist whole-oats (moisture content 35%) were treated with Solution 2 at the level required to ensure satisfactory storage in the moist state without moulding.

This resulted in a level of formaldehyde recovered from the protein of 1.2 g/100 g Crude Protein.

TABLE 5

| No. | Treatment | Rate L/1000 kg | HCHO recovered from the crude protein (g HCHO/100 g CP) |
|---|---|---|---|
| E | No additive | — | — |
| G | Solution 4 | 5.3 | 0.8 |
| H | Solution 2 | 7.0 | 0.8 |
| I | Formalin | 2.9 | 0.8 |
| L | Solution 2 | 21.4 | 1.2 |

Samples of ground oats from the treatments were subjected to the in-sacco test for the loss of protein described in Example 1 but, in addition, the rate of loss of $\alpha$-linked glucose polymer was also measured. The results of these tests are given in Tables 6 to 9.

TABLE 6

Percentage disappearance (% weight) of $\alpha$-linked glucose polymer

| In-sacco time in rumen hrs | Treatment | | | | |
|---|---|---|---|---|---|
| | E | G | H | I | L |
| 0 | 0.0 | 0.0 | 0.0 | 0.0 | 0.0 |
| 1 | 87.3 | 92.0 | 93.3 | 93.3 | 37.4 |
| 2 | 97.2 | 91.4 | 88.9 | 97.1 | 33.6 |
| 4 | 95.2 | 98.2 | 90.1 | 96.7 | 53.9 |
| 8 | 97.9 | 97.5 | 96.1 | 97.6 | 75.1 |
| 24 | 100.0 | 100.0 | 99.6 | 99.8 | 99.5 |

TABLE 7

Comparison of treatments for the disappearance of $\alpha$-linked glucose polymer

| Treatment | Treatments | | | | |
|---|---|---|---|---|---|
| | E | G | H | I | L |
| E | — | (NS) | x | (NS) | xxx |
| G | — | — | xx | (NS) | xxx |
| H | — | — | — | xxx | xxx |
| I | — | — | — | — | xxx |

NS Non significant
x $P<0.05$
xx $<P\ 0.01$
xxx $P<0.001$

TABLE 8
Percentage disappearance of total nitrogen in-sacco. (by weight)

| Time in rumen hrs | Treatment E | G | H | I | L |
|---|---|---|---|---|---|
| 0 | 0.0 | 0.0 | 0.0 | 0.0 | 0.0 |
| 1 | 83.3 | 70.8 | 75.6 | 78.7 | 27.5 |
| 2 | 84.7 | 73.2 | 72.3 | 81.2 | 38.8 |
| 4 | 87.6 | 80.8 | 72.2 | 86.5 | 50.8 |
| 8 | 89.2 | 84.9 | 85.0 | 86.0 | 61.8 |
| 24 | 92.1 | 90.9 | 91.0 | 92.4 | 82.0 |

TABLE 9
Comparison of treatments for the disappearance of total nitrogen.

| Treatment | Treatment E | G | H | I | L |
|---|---|---|---|---|---|
| E | — | xx | x | (NS) | xxx |
| G | — | — | (NS) | x | xxx |
| H | — | — | — | (NS) | xxx |
| I | — | — | — | — | xxx |

The results demonstrate the very significant response to the use of Solution 2 on moist oats (Treatment L) compared to its use on dried oats (Treatment H) and the use of formaldehyde alone (Treatment I) or in combination with sugar-alcohol (Treatment G) on dried oats. The higher rate of recovery of formaldehyde from the crude protein with Treatment L was associated with the higher rate of application of formalin with the solution, occassioned by the requirement to preserve the grain in the moist state.

A synergistic response to formalin in the presence of the acid-lignone sulphonate mixture in Solution 2 is apparent from these results with the measured response to the rate of loss of $\alpha$-linked glucose and total nitrogen.

The energy:protein relationships occurring within the rumen are an essential part of the fermentation mechanism. Ideally the rate of release of the starch content of the grain should be faster than that of the nitrogen content. A study of this relationship was made by comparing the regression slopes of individual grain treatments for loss of both starch (as $\alpha$-linked glucose polymer) and protein (as total N) in the rumen over the incubation time expression in Tables 6 to 9. The most significant starch:protein relationship was obtained for sample L and it is probable that this treatment will result in a stable microbial community in the rumen environment. A similar relationship was not found in the case of the formalin treatment (Treatment I).

Example 5
The following treatments were applied to whole barley (moisture content 25%) at the rates given in Table 4:

| No. | Treatment | Rate l/1000 kg |
|---|---|---|
| A | propionic acid | 10 |
| B | Solution 2 | 11 |
| C | Solution 3 | 12.5 |

The samples were stored for four months and then ground and tested *in sacco* with sheep by the standard method (Example 2) using two different basal diets.

Table 10 shows the crude protein, organic matter and dry-matter losses for the various treatments after the different insertion periods.

TABLE 10
Losses of dry-matter, organic matter and crude protein (% weight) measured in-sacco.

| Time hrs Treatment | | Loss % by weight | | |
| --- | --- | --- | --- | --- |
| Basal diet of silage | Dry-matter | Crude-Protein | Organic matter | |
| **A** | | | | |
| 2 | 66.1[x] | 45.1[xxx] | 66.2 | |
| 5 | 77.3[xx] | 68.7[xxx] | — | |
| 9 | 82.3[xx] | 80.5[xxx] | 82.7 | |
| **B** | | | | |
| 2 | 53.3 | 16.3 | 53.4 | |
| 5 | 53.8 | 18.3 | 54.0 | |
| 9 | 64.1 | 35.4 | 64.3 | |
| **C** | | | | |
| 2 | 53.9 | 17.3 | 53.8 | |
| 5 | 51.5 | 16.5 | 51.9 | |
| 9 | 61.4 | 27.8 | 61.6 | |
| **Basal diet of hay** | | | | |
| **A** | | | | |
| 2 | 74.7[xxx] | 60.6[xxx] | 75.2 | |
| 5 | 78.4[xx] | 69.5[xxx] | 78.8 | |
| 9 | 82.6[x] | 93.8[xxx] | | |
| **B** | | | | |
| 2 | 45.5 | 18.7 | 45.3 | |
| 5 | 59.3 | 24.9 | — | |
| 9 | 72.5 | 49.7 | — | |
| **C** | | | | |
| 2 | 44.6 | 18.1 | 44.2 | |
| 5 | 59.5 | 23.7 | — | |
| 9 | 69.8 | 41.4 | 69.9 | |

Levels of significance for the A treatments against corresponding B and C treatment for equivalent periods:

[x]$P < 0.05$,
[xx]$P < 0.01$,
[xxx]$P < 0.001$

Table 10 shows the very significant effect of the treatment of grains with Solution 2, on the rumen degradation of both dry-matter and crude protein, compared to the treatment with propionic acid. The use of the Solution 2 at the higher rate (Treatment C) showed a significant difference in protein loss after 9 hours over the lower rate (Treatment B) but there was no significant difference between these treatments on the losses of dry-matter or organic matter.

The level of addition of Solution 2 used—treatment C was, however, necessary to ensure adequate keeping qualities in the stored moist grain over the period of four months.

Example 6

The effect of Solution 2 (Example 1) on the preservation of moist oats was compared with propionic acid—Table 11. Similar results have been obtained with other moist grains.

TABLE 11
Storage of moist oats—35% moisture content

| | | | Temperature °C | | | | | |
| --- | --- | --- | --- | --- | --- | --- | --- | --- |
| | | Level | Storage time (days) | | | | | |
| No. | Treatment | L/1000 kg | 1 | 4 | 5 | 8 | 11 | 15 |
| A | Propionic acid | 15.1 | 22 | 19 | 18 | 14 | 10 | 10 |
| B | Solution 2 | 18.9 | 24 | 21 | 20 | 16 | 12 | 12 |
| C | Solution 2 | 23.1 | 24 | 22 | 21 | 16 | 13 | 13 |
| D | Solution 2 | 31.8 | 25 | 23 | 21 | 16 | 13.5 | 13 |

The data in Table 11 show that the treatment of moist oats with Solution 2 at a level which is 1.25 times that which is usually recommended for propionic acid alone resulted in satisfactory storage.

8

There was no moulding observed with any of the treatments. The higher temperature rise with treatments B—D is a result of a chemical reaction between the starch component of the grain and the constituents of Solution 2.

Example 7

A large heap of moist barley (about 200000 kg) of moisture content 21% was treated with Solution 2 at the rate recommended in Example 2.

The treated grain was stored under farm conditions for a period of about 6 months during which time the temperature was monitored frequently and samples taken from the determination of the numbers of moulding agents. The determined counts are shown in Table 12 and are low.

TABLE 12
Moulding agents present on stored grain

| | Incubation temperature °C | | |
|---|---|---|---|
| | 25 | 37 | 55 |
| Moulds | $2.8 \times 10^4$ | $1 \times 10^4$ | — |
| Actinomycetes | — | — | $2 \times 10^2$ |
| Yeasts | $5 \times 10^4$ | $3.7 \times 10^4$ | — |

Example 8

Whole oats (moisture content 60%) were inoculated with fusareum graminearum, which is known to be the causative agent in the disease vulvo-vaginitis in pigs. It was kept for a period of two weeks at a temperature of 20—24°C and 70% relative humidity. During the next two days the temperature was held at +5°C, checked for the formation of the mycotoxin Zearalenone and then ground.

Replicate samples of the ground contaminated grain were treated either with propionic acid (at 0.08 ml/g dry-matter), Solution 2 (at 0.12 ml/g dry-matter) or left untreated as control samples.

Table 13 shows the Zearalenone content (ppm) of the replicate samples after 0, 3, 14, and 28 days. It can be seen that the samples treated with Solution 2 are very substantially superior to the samples either untreated or treated with propionic acid.

TABLE 13

| | Zearalenone ppm | | | |
|---|---|---|---|---|
| | | Storage time (days) | | |
| Treatment | $0^x$ | 3 | 14 | 28 |
| Control-untreated | 1594.4 | 1659.8 | 2189.9 | 1973.3 |
| Propionic acid | 1594.4 | 1409.0 | 1406.5 | 1365.0 |
| Solution 2 | 1594.4 | 554.2 | 294.9 | 108.0 |

[x]Before the addition of the treatments

Example 9

Samples of grain from Example 8 were fed to rats to determine the modifying effect of the treatments on the Zearalenone concentration and the incidence of vulvo-vaginitis. Replicated groups of five rats were fed the samples at a rate of 0.25 g per day per rat for a period of five days and the animals were then slaughtered and the estrogenic effect of the samples determined by weighing uterus, the vaginal fluid, whether the vagina was opened or not.

The results of these measurements (Table 14) clearly show a very significant effect of the treatment of grain with Solution 2 on these parameters, compared to either the untreated grain or that treated with propionic acid. With Solution 2 there was no occurrence of abortion.

**O 043 202**

TABLE 14
Effect of Zearalenone concentrations of treated grain on the incidence of
vulvo-vaginitis in rats.

| | | | Response | |
|---|---|---|---|---|
| Treatment | Storage time (days) | Uterus weight mg | Fluid+ | Vaginal opening* |
| No additive | 0 | 111.9 | ++ | 1 |
| | 3 | 109.5 | +(+) | 3 |
| | 14 | 112.6 | ++ | 2 |
| | 28 | 113.3 | +(+) | 2 |
| Propionic acid | 0 | 111.9 | ++ | 1 |
| | 3 | 103.8 | + | 2 |
| | 14 | 113.5 | +++ | 4 |
| | 28 | 121.9 | ++ | 3 |
| Solution 2 | 0 | 111.9 | ++ | |
| | 3 | 81.4 | (+) | — |
| | 14 | 50.9 | — | — |
| | 28 | 37.4 | — | — |

+not much
++moderate
+++abundant
*Number of rats with opened vagina—measure of abortion

The amount of solution to be added to the feedingstuff will depend largely upon the moisture content, although other factors are relevant such as length of storage time, condition of the grain and evenness of the additive distribution, and may vary in general from 5 to 50 l/1000 kg. Under well controlled conditions as in these experiments, the following are recommended dosage rates for grain (Solution 2):—

| Moisture content of grain % by weight | Dosage l/1000 kg |
|---|---|
| 16 | 7.0 |
| 18 | 8.0 |
| 20 | 9.5 |
| 22 | 10.5 |
| 24 | 12.0 |
| 26 | 13.0 |
| 28 | 14.5 |
| 30 | 16.5 |
| 32 | 18.0 |
| 40 | 25.5 |
| 50 | 36.0 |

Under field conditions or for periods of extended storage larger doses are needed.

**Claims**

1. A composition for the treatment principally of the starch fraction of protein and carbohydrate-containing animal feedingstuffs in the form of an aqueous solution containing in weight percent of the total weight:—

| | |
|---|---|
| Sulphite waste liquid or lignone sulphonate | 5 to 15 |
| formaldehyde (HCHO) | 9 to 25 |
| one or more organic acids | 30 to 60 |

2. A composition according to claim 1 wherein the organic acids are $C_{1-6}$ aliphatic carboxylic acids.

3. A composition according to claim 2 containing as organic acids a mixture of acetic and isobutyric acids.

4. A composition according to claim 2 containing as organic acids a mixture of propionic and isobutyric acids.

10

5. A composition according to claim 2 containing as organic acids a mixture of acetic and propionic acids.

6. A composition according to any preceding claim including a stabiliser.

7. A composition according to claim 5 wherein the stabiliser comprises one or more of urea, methanol and utropine.

8. A composition according to claim 7 including 0.1 to 1% by weight of methanol.

9. A composition according to claim 7 or claim 8 including up to 5% by weight of urea.

10. A composition according to any of claims 7, 8 or 9 including up to 1% by weight of utropine.

11. A composition according to any preceding claim wherein the content of sulphite waste liquid or lignone sulphonate is from 5 to 9 percent by weight.

12. A method of treating a feedingstuff for ruminant animals in the moist state (moisture content 15—85%) which comprises the admixture with the feedingstuff of a composition according to any preceding claim.

13. A method of treating a protein and carbohydrate-containing feedingstuff for ruminant animals in the moist state (moisture content 15—85%) which comprises the admixture with the feedingstuff of an amount of a composition according to any of claims 1 to 11 which is effective to improve the preservation of the feedingstuff and reduce the degree of breakdown of the starch fraction of the feedingstuff in the rumen of the animal.

14. A method according to claim 12 or claim 13 in which the feedingstuff is a whole grain feedingstuff.

15. A method according to any of claims 12 to 14 wherein the composition is added to the feedingstuff in an amount from 5 to 50 l/1000 kg.

16. A method according to claim 15 wherein the composition is added to the feedingstuff in substantially the specified recommended amount depending upon the moisture content of the feedingstuff.

**Patentansprüche**

1. Eine Zusammensetzung zur Behandlung hauptsächlich der Stärkefraktion von Protein- und Kohlenhydrat-enthaltenden Futtermitteln in Form einer wäßrigen Lösung, enthaltend in Gewichtsprozent bezogen auf das Gesamtgewicht:

| | |
|---|---|
| Sulfitablauge oder Ligninsulfonat | 5 bis 15 |
| Formaldehyd (HCHO) | 9 bis 25 |
| eine oder mehrere organische Säuren | 30 bis 60 |

2. Eine Zusammensetzung nach Anspruch 1, in der die organischen Säuren $C_{1-6}$-aliphatische Carbonsäuren sind.

3. Eine Zusammensetzung nach Anspruch 2, enthaltend als organische Säure ein Gemisch von Essigsäure und Isobuttersäure.

4. Eine Zusammensetzung nach Anspruch 2, enthaltend als organische Säure ein Gemisch von Propionsäure und Isobuttersäure.

5. Eine Zusammensetzung nach Anspruch 2, enthaltend als organische Säure ein Gemisch von Essigsäure und Propionsäure.

6. Eine Zusammensetzung nach einem der vorstehenden Ansprüche, die einen Stabilisator mit einschließt.

7. Eine Zusammensetzung nach Anspruch 5, in der der Stabilisator Harnstoff, Methanol und/oder Utropin ist.

8. Eine Zusammensetzung nach Anspruch 7, enthaltend 0,1 bis 1 Gewichtsprozent Methanol.

9. Eine Zusammensetzung nach Anspruch 7 oder 8, enthaltend bis zu 5 Gewichtsprozent Harnstoff.

10. Eine Zusammensetzung nach einem der Ansprüche 7, 8 oder 9, enthaltend bis zu 1 Gewichtsprozent Utropin.

11. Eine Zusammensetzung nach einem der vorstehenden Ansprüche, in der der Gehalt an Sulfitablauge oder Ligninsulfonat 5 bis 9 Gewichtsprozent beträgt.

12. Ein Verfahren zur Behandlung eines Futtermittels für Wiederkäuer in feuchtem Zustand (Feuchtigkeitsgehalt 15 bis 85%), gekennzeichnet durch Vermischen des Futtermittels mit einer Zusammensetzung nach einem der vorstehenden Ansprüche.

13. Ein Verfahren zur Behandlung eines Protein- und Kohlenhydrat-enthaltenden Futtermittels für Wiederkäuer in feuchtem Zustand (Feuchtigkeitsgehalt 15 bis 85%), gekennzeichnet durch Vermischen des Futtermittels mit einer Menge einer Zusammensetzung nach einem der Ansprüche 1 bis 11, die die Konservierung des Futtermittels wirksam verbessert und den Grad des Abbaus der Stärkefraktion des Futtermittels im Pansen des Tieres wirksam vermindert.

14. Ein Verfahren nach Anspruch 12 oder 13, in dem das Futtermittel ein Vollkorn-Futtermittel ist.

15. Ein Verfahren nach einem der Ansprüche 12 bis 14, in dem die Zusammensetzung in einer Menge von 5 bis 50 Liter pro 1000 kg dem Futtermittel zugesetzt wird.

16. Ein Verfahren nach Anspruch 15, in dem die Zusammensetzung dem Futtermittel im wesentlichen in der spezifizierten empfohlenen Menge zugesetzt wird je nach Feuchtigkeitsgehalt des Futtermittels.

**Revendications**

1. Composition pour le traitement principalement de la fraction amidon d'aliments pour animaux, contenant des protéines et des hydrates de carbone, caractérisée en ce qu'elle est sous forme d'une solution aqueuse, contenant en pourcentage pondéral du poids total:

| | |
|---|---|
| · liquide résiduaire au sulfite ou lignone sulfonate | 5 à 15 |
| · formaldéhyde (HCHO) | 9 à 25 |
| · un ou plusieurs acides organiques | 30 à 60 |

2. Composition selon la revendication 1, caractérisée en ce que les acides organiques sont des acides carboxyliques aliphatiques en $C_1$ à $C_6$.

3. Composition selon la revendication 2, caractérisée en ce qu'elle contient à titre d'acides organiques, un mélange d'acides acétique et isobutyrique.

4. Composition selon la revendication 2, caractérisée en ce qu'elle contient à titre d'acides organiques, un mélange d'acide propionique et isobutyrique.

5. Composition selon la revendication 2, caractérisée en ce qu'elle contient à titre d'acide organique, un mélange d'acides acétique et propionique.

6. Composition selon l'une des revendications 1 à 5, caractérisée en ce qu'elle comprend un stabilisant.

7. Composition selon la revendication 5, caractérisée en ce que le stabilisant comprend un ou plusieurs composés, parmi l'urée, le méthanol et l'utropine.

8. Composition selon la revendication 7, caractérisée en ce qu'elle comprend 0,1 à 1% en poids de méthanol.

9. Composition selon la revendication 7 ou 8, caractérisée en ce qu'elle comprend jusqu'à 5% en poids d'urée.

10. Composition selon l'une des revendications 7, 8 ou 9, caractérisée en ce qu'elle comprend jusqu'à 1% en poids d'utropine.

11. Composition selon l'une des revendications 1 à 10, caractérisée en ce que la teneur en liquide résiduaire au sulfite ou en lignone sulfonate est de 5 à 9% en poids.

12. Procédé de traitement d'aliments pour ruminants, à l'état humide (teneur en humidité de 15 à 85%), caractérisé en ce qu'on mélange à l'aliment, une composition selon l'une des revendications 1 à 11.

13. Procédé de traitement d'aliments contenant des protéines et des hydrates de carbone, pour ruminants et à l'état humide (teneur en humidité de 15 à 85%), caractérisé en ce qu'il comprend le mélange à l'aliment d'une quantité d'une composition selon l'une des revendications 1 à 11, qui est efficace pour améliorer la conservation de l'aliment et réduire le degré de dégradation de la fraction amidon de l'aliment dans le rumen de l'animal.

14. Procédé selon la revendication 12 ou 13, caractérisé en ce que l'aliment est un aliment en grains entiers.

15. Procédé selon l'une des revendications 12 à 14, caractérisé en ce que la composition est ajoutée à l'aliment en une quantité de 5 à 50 l/1000 kg.

16. Procédé selon la revendication 15, caractérisée en ce que la composition est ajoutée à l'aliment pratiquement en une quantité spécifiée recommandée, dépendant de la teneur en humidité de l'aliment.

# FIG.1.

## CRUDE PROTEIN LOSS

9 hours
5 hours
2 hours

Treatment

# FIG.2.

## DRY MATTER LOSS

9 hours
5 hours
2 hours

Treatment